(19)

Europäisches Patentamt
European Patent Office
Office européen des brevets

(11) **EP 4 574 608 A1**

(12) **EUROPEAN PATENT APPLICATION**

(43) Date of publication:
**25.06.2025  Bulletin 2025/26**

(21) Application number: **24220614.2**

(22) Date of filing: **17.12.2024**

(51) International Patent Classification (IPC):
**B60W 30/14** (2006.01)　**B60W 30/16** (2020.01)
**B60W 30/18** (2012.01)　**B60W 50/00** (2006.01)
**B60W 50/14** (2020.01)

(52) Cooperative Patent Classification (CPC):
**B60W 30/18072; B60W 30/143; B60W 30/16;**
**B60W 50/0097; B60W 50/14;** B60W 2030/1809;
B60W 2520/10; B60W 2552/15; B60W 2554/802;
B60W 2556/50; B60W 2720/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.12.2023　JP 2023215628**

(71) Applicant: **TOYOTA JIDOSHA KABUSHIKI
KAISHA
Toyota-shi
Aichi 471-8571 (JP)**

(72) Inventors:
• **KAMATANI, Hideki
TOYOTA-SHI, AICHI, 471-8571 (JP)**
• **NARITA, Takahiro
TOYOTA-SHI, AICHI, 471-8571 (JP)**

(74) Representative: **Cabinet Beau de Loménie
103, rue de Grenelle
75340 Paris Cedex 07 (FR)**

(54) **VEHICLE DRIVING ASSISTANCE APPARATUS**

(57)　A vehicle driving assistance apparatus (10) causes the own vehicle (100) to coast when a vehicle moving speed increases and reaches a predetermined upper limit vehicle moving speed while executing an autonomous moving control, and powers the own vehicle (100) when the vehicle moving speed decreases and reaches a predetermined lower limit vehicle moving speed. The apparatus (10) causes the own vehicle (100) to coast when a coasting permission condition becomes satisfied while powering the own vehicle (100) by the autonomous moving control even when the vehicle moving speed of the own vehicle (100) is lower than the predetermined upper limit vehicle moving speed. The coasting permission condition is a condition that a road located a predetermined distance ahead from the own vehicle (100) and on which the own vehicle (100) is expected to move, is a downhill road.

FIG.6

EP 4 574 608 A1

**Description**

BACKGROUND

Field

The present invention relates to a vehicle driving assistance apparatus.

Description of the related art

There is known a vehicle driving assistance apparatus which executes an autonomous moving control of causing an own vehicle to move autonomously by increasing and decreasing a vehicle moving speed of the own vehicle. As such a vehicle driving assistance apparatus, there is also known a vehicle driving assistance apparatus which (i) causes the own vehicle to coast when the vehicle moving speed of the own vehicle reaches a predetermined upper limit vehicle moving speed while executing the autonomous moving control, and powers the own vehicle when the vehicle moving speed of the own vehicle reaches a predetermined lower limit vehicle moving speed (see, for example, JP 2022-95320 A). This vehicle driving assistance apparatus reduces a consumed energy amount, i.e., an amount of energy consumed to move the own vehicle by causing the own vehicle to coast.

When the own vehicle moves on a downhill road, the vehicle moving speed of the own vehicle increases even when the own vehicle coasts. Therefore, when the own vehicle moves on the downhill road while the autonomous moving control is executed, it is advantageous to cause the own vehicle to coast in order to reduce the consumed energy amount. Therefore, when the own vehicle starts to move on the downhill road, it is desirable to cause the own vehicle to coast.

However, when the vehicle moving speed of the own vehicle is close to the upper limit vehicle moving speed when the own vehicle reaches a start point of the downhill road, the vehicle moving speed of the own vehicle may reach the upper limit vehicle moving speed while the own vehicle is moving on the downhill road, and it may be necessary to decelerate the own vehicle by applying a braking force to the own vehicle. It is not desirable to decelerate the own vehicle by applying the braking force to the own vehicle in terms of reducing the consumed energy amount.

SUMMARY

The object of the present invention is to provide a vehicle driving assistance apparatus which can cause the own vehicle to coast for a long distance while the own vehicle is moving on the downhill road while the autonomous moving control is executed.

A vehicle driving assistance apparatus according to the present invention comprises an electronic control unit which executes an autonomous moving control of causing an own vehicle to move autonomously by increasing and decreasing a vehicle moving speed of the own vehicle between a predetermined upper limit vehicle moving speed and a predetermined lower limit vehicle moving speed. The electronic control unit being configured to (i) cause the own vehicle to coast when the vehicle moving speed increases and reaches the predetermined upper limit vehicle moving speed while executing the autonomous moving control, and (ii) power the own vehicle when the vehicle moving speed decreases and reaches the predetermined lower limit vehicle moving speed. The electronic control unit is configured to cause the own vehicle to coast when a coasting permission condition becomes satisfied while powering the own vehicle by the autonomous moving control even when the vehicle moving speed of the own vehicle is lower than the predetermined upper limit vehicle moving speed. The coasting permission condition is a condition that a road located a predetermined distance ahead from the own vehicle and on which the own vehicle is expected to move, is a downhill road.

According to the vehicle driving assistance apparatus of the present invention, when the coasting permission condition becomes satisfied, the own vehicle starts coasting even when the vehicle moving speed of the own vehicle does not reach the predetermined upper limit vehicle moving speed. Therefore, when the own vehicle reaches a start point of the downhill road, the own vehicle moving speed is sufficiently low. Therefore, when the autonomous moving control is executed, the own vehicle can be allowed to coast for a long distance while the own vehicle is moving on the downhill road. As a result, the consumed energy amount (i.e. the amount of energy consumed to move the own vehicle) can be reduced. Furthermore, according to the vehicle driving assistance apparatus of the present invention, when the own vehicle reaches the start point of the downhill road, the vehicle moving speed is low. Therefore, the own vehicle can be allowed to coast for a longer distance while the own vehicle is moving on the downhill road. Therefore, the consumed energy amount can be further reduced.

In the vehicle driving assistance apparatus according to an aspect of the present invention, the coasting permission condition may be a condition that (i) the road located the predetermined distance ahead from the own vehicle and on which the own vehicle is expected to move, is the downhill road, and (ii) the vehicle moving speed is lower than the predetermined upper limit vehicle moving speed and equal to or higher than a predetermined vehicle moving speed. In this case, the predetermined vehicle moving speed may be lower than the predetermined upper limit vehicle moving speed and equal to or higher than the predetermined lower limit vehicle moving speed. Further, in this case, the predetermined vehicle moving speed may be set to a lower vehicle moving speed as an amount of increase in the vehicle moving speed while the own vehicle is moving on the downhill road, increases.

According to the vehicle driving assistance apparatus of this aspect of the present invention, the own vehicle starts coasting at the lower vehicle moving speed as the amount of increase in the vehicle moving speed while the own vehicle is moving on the downhill road, increases. Therefore, when the own vehicle reaches the start point of the downhill road, the vehicle moving speed of the own vehicle is sufficiently low. Therefore, when the autonomous moving control is executed, the own vehicle can be allowed to coast for a longer distance while the own vehicle is moving on the downhill road. As a result, the amount of energy consumed to move the own vehicle can be reduced.

In the vehicle driving assistance apparatus according to another aspect of the present invention, the coasting permission condition may be a condition that (i) the road located the predetermined distance ahead from the own vehicle and on which the own vehicle is expected to move, is the downhill road, and (ii) the vehicle moving speed is lower than the predetermined upper limit vehicle moving speed and equal to or higher than a predetermined vehicle moving speed. In this case, the predetermined vehicle moving speed may be lower than the predetermined upper limit vehicle moving speed. Further, in this case, the predetermined vehicle moving speed may be set to a lower vehicle moving speed as an amount of increase in the vehicle moving speed while the own vehicle is moving on the downhill road, increases.

According to the vehicle driving assistance apparatus of this aspect of the present invention, the own vehicle starts coasting at the lower vehicle moving speed as the amount of increase in the vehicle moving speed while the own vehicle is moving on the downhill road, increases. Therefore, when the own vehicle reaches the start point of the downhill road, the vehicle moving speed of the own vehicle is sufficiently low. Therefore, when the autonomous moving control is executed, the own vehicle can be allowed to coast for a longer distance while the own vehicle is moving on the downhill road. As a result, the amount of energy consumed to move the own vehicle can be reduced.

In the vehicle driving assistance apparatus according to further another aspect of the present invention, the coasting permission condition may be a condition that (i) the road located the predetermined distance ahead from the own vehicle and on which the own vehicle is expected to move, is the downhill road, and (ii) a distance between the own vehicle and a start point of the downhill road is equal to or shorter than a predetermined distance. In this case, the predetermined distance may be set to a longer distance as an amount of increase in the vehicle moving speed while the own vehicle is moving on the downhill road, increases.

According to the vehicle driving assistance apparatus of this aspect of the present invention, the own vehicle starts coasting at a point further away from the downhill road as the amount of increase in the vehicle moving speed while the own vehicle is moving on the downhill road, increases. Therefore, when the own vehicle reaches the start point of the downhill road, the vehicle moving speed is sufficiently low. Therefore, when the autonomous moving control is executed, the own vehicle can be allowed to coast for a longer distance while the own vehicle is moving on the downhill road. As a result, the amount of energy consumed to move the own vehicle can be reduced.

In the vehicle driving assistance apparatus according to further another aspect of the present invention, the coasting permission condition may be a condition that (i) the road located the predetermined distance ahead from the own vehicle and on which the own vehicle is expected to move, is the downhill road, and (ii) if the own vehicle starts coasting at the current time, the vehicle moving speed is predicted to reach the predetermined lower limit vehicle moving speed at a point of time when the own vehicle reaches a start point of the downhill road.

According to the vehicle driving assistance apparatus of this aspect of the present invention, the vehicle moving speed can be prevented from falling below the predetermined lower limit vehicle moving speed while the own vehicle is coasting.

In the vehicle driving assistance apparatus according to further another aspect of the present invention, the coasting permission condition may also become satisfied when (i) there is no following vehicle and (ii) an amount of increase in the vehicle moving speed while the own vehicle is moving on the downhill road, is equal to or greater than a difference between the predetermined upper limit vehicle moving speed and the predetermined lower limit vehicle moving speed. In this case, the electronic control unit may be configured to implement a coasting continuation notification to a user of the own vehicle and to keep the own vehicle coasting when the vehicle moving speed becomes lower than the predetermined lower limit vehicle moving speed after starting to cause the own vehicle to coast in response to the coasting permission condition becoming satisfied. Further, in this case, the coasting continuation notification may be a notification to notify the user that the own vehicle is kept coasting since the downhill road exists on the road on which the own vehicle is expected to move.

According to the vehicle driving assistance apparatus of this aspect of the present invention, even when the vehicle moving speed falls below the predetermined lower limit vehicle moving speed, the own vehicle is kept coasting with the user's consent.

Therefore, when the own vehicle reaches the start point of the downhill road, the vehicle moving speed of the own vehicle is sufficiently low. Therefore, when autonomous moving control is executed, the own vehicle can be allowed to coast for a longer distance while the own vehicle is moving on the downhill road. As a result, the amount of energy consumed to move the own vehicle can be reduced.

Elements of the invention are not limited to elements of embodiments and modified examples of the invention described with reference to the drawings. The other objects, features and accompanied advantages of the invention can be easily understood from the embodiments and the modified examples of the invention.

BRIEF DESCRIPTION OF THE DRAWINGS

FIG. 1 is a view which shows a vehicle driving assistance apparatus according to an embodiment of the present invention.
FIG. 2 is a view which shows a scene where a preceding vehicle exists.
FIG. 3 is a view which shows a scene where the preceding vehicle does not exist.
FIG. 4 is a view which shows a flowchart of a routine executed by the vehicle driving assistance apparatus according to the embodiment of the present invention.
FIG. 5 is a view which shows a flowchart of a routine executed by the vehicle driving assistance apparatus according to the embodiment of the present invention.
FIG. 6 is a view which shows a flowchart of a routine executed by the vehicle driving assistance apparatus according to the embodiment of the present invention.
FIG. 7 is a time chart which shows an example of a change of an own vehicle moving speed (i.e., a moving speed of an own vehicle) when a forced coasting control is executed.
FIG. 8 is a time chart which shows an example of the change of the own vehicle moving speed (i.e., the moving speed of the own vehicle) when the forced coasting control is executed.
FIG. 9 is a view which shows a flowchart of a routine executed by the vehicle driving assistance apparatus according to the embodiment of the present invention.
FIG. 10 is a view which shows a flowchart of a routine executed by the vehicle driving assistance apparatus according to the embodiment of the present invention.
FIG. 11 is a view which shows a flowchart of a routine executed by the vehicle driving assistance apparatus according to the embodiment of the present invention.

DETAILED DESCRIPTION

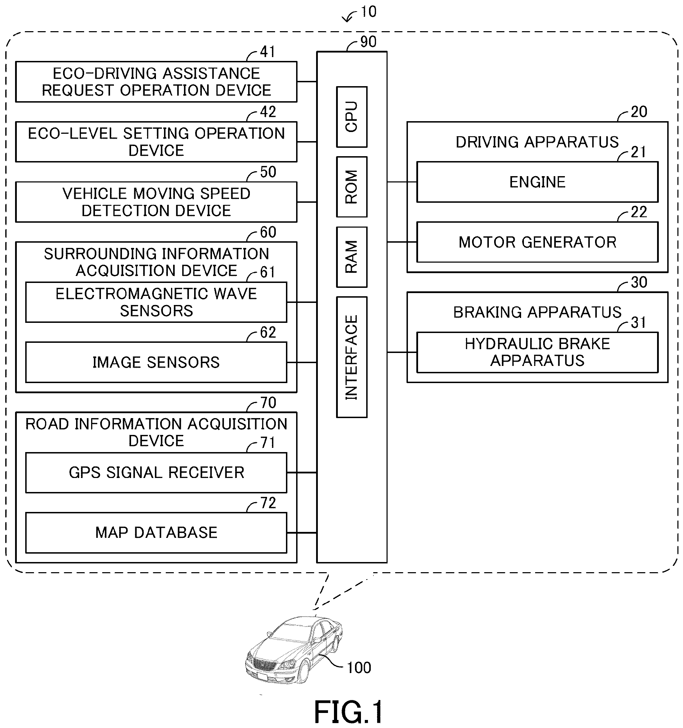

Below, a vehicle driving assistance apparatus according to an embodiment of the present invention will be described with reference to the drawings. FIG. 1 shows the vehicle driving assistance apparatus 10 according to the embodiment of the present invention. The vehicle driving assistance apparatus 10 is mounted on an own vehicle 100. Below, the vehicle driving assistance apparatus 10 will be described using as an example in which a user of the own vehicle 100 is a driver of the own vehicle 100 (i.e., a person who rides in the own vehicle 100 and drives the own vehicle 100).

However, the user of the own vehicle 100 may also be a remote operator of the own vehicle 100 (i.e., a person who drives the own vehicle 100 remotely without riding in the own vehicle 100). When the user of the own vehicle 100 is the remote operator, the vehicle driving assistance apparatuses 10 are mounted on the own vehicle 100 and on a remote operation facility installed outside the own vehicle 100 to remotely drive the own vehicle 100, respectively and functions of the vehicle driving assistance apparatus 10 described below are shared between the vehicle driving assistance apparatus 10 mounted on the own vehicle 100 and the vehicle driving assistance apparatus 10 mounted on the remote operation facility.

As shown in FIG. 1, the vehicle driving assistance apparatus 10 includes an ECU (an electronic control unit) 90 as a control device. The ECU 90 includes a microcomputer as a main component. The microcomputer includes a CPU, a computer-readable storage medium such as a ROM, a RAM, and a non-volatile memory, and an interface. The CPU is configured to realize various functions by executing instructions, programs, or routines stored in the computer-readable storage medium. In particular, in this embodiment, the vehicle driving assistance apparatus 10 stores in the storage medium programs which realizes various controls executed by the vehicle driving assistance apparatus 10.

It should be noted that in this embodiment, the vehicle driving assistance apparatus 10 includes only one ECU 90, but it may also be configured to include multiple ECUs, with each ECU performing functions of the vehicle driving assistance apparatus 10 described below.

In addition, the vehicle driving assistance apparatus 10 may be configured to be able to update the programs stored in the storage medium through wireless communication with an external device (e.g., internet communication).

As shown in FIG. 1, the own vehicle 100 is equipped with a driving apparatus 20 and a braking apparatus 30.

The driving apparatus 20 is an apparatus which applies a driving force to the own vehicle 100 to power the own vehicle 100. In this embodiment, the driving apparatus 20 includes an internal combustion engine 21 and at least one motor generator 22. The internal combustion engine 21 and the at least one motor generator 22 are electrically connected to the ECU 90. The vehicle driving assistance apparatus 10 controls a magnitude of the driving force applied to the own vehicle 100 by controlling an operation of the internal combustion engine 21 and an operation of the at least one motor generator 22.

The braking apparatus 30 is an apparatus which applies a braking force to the own vehicle 100 to brake the own vehicle 100. In this embodiment, the braking apparatus 30 is equipped with a hydraulic brake apparatus 31. The hydraulic brake apparatus 31 is electrically connected to the ECU 90. The vehicle driving assistance apparatus 10 controls a magnitude of the braking force applied to the own vehicle 100 by controlling an operation of the hydraulic brake apparatus 31.

Furthermore, the own vehicle 100 is equipped with an eco-driving assistance request operation device 41, an eco-level setting operation device 42, a vehicle moving speed detection device 50, a surrounding information acquisition device 60, and a road information acquisition device 70.

The eco-driving assistance request operation device 41 is a device which the driver operates to request an execution of an eco-autonomous moving control. The eco-autonomous moving control will be described later. The eco-driving assistance request operation device 41 is electrically connected to the ECU 90. When the eco-driving assistance request operation device 41 is operated when the eco-autonomous moving control is not executed, the vehicle driving assistance apparatus 10 determines that the execution of the eco-autonomous moving control is requested. On the other hand, when the eco-driving assistance request operation device 41 is operated while the eco-autonomous moving control is being executed, the vehicle driving assistance apparatus 10 determines that a stop of the eco-autonomous moving control is requested.

The eco-level setting operation device 42 is a device which the driver operates to set a requested eco-level LVreq. The requested eco-level LVreq indicates a degree of a consumed energy amount that the driver requests to be reduced by the eco-autonomous moving control. The degree of the consumed energy amount that the driver requests to be reduced by the eco-autonomous moving control, increases as the requested eco-level LVreq increases. In this embodiment, the driver can set one of a strong eco-level LVs, a medium eco-level LVm, and a weak eco-level LVw as the requested eco-level LVreq by operating the eco-level setting operation device 42. The eco-level setting operation device 42 is electrically connected to the ECU 90. The vehicle driving assistance apparatus 10 acquires the requested eco-level LVreq set by the driver operating the eco-level setting operation device 42.

It should be noted that the consumed energy amount is an amount of energy consumed to move the own vehicle 100.

The vehicle moving speed detection device 50 is a device which detects a moving speed of the own vehicle 100. The vehicle moving speed detection device 50 includes, for example, wheel rotation speed sensors attached to wheels of the own vehicle 100, respectively. The vehicle moving speed detection device 50 is electrically connected to the ECU 90. The vehicle driving assistance apparatus 10 acquires the moving speed of the own vehicle 100 as an own vehicle moving speed V by the vehicle moving speed detection device 50.

The surrounding information acquisition device 60 is a device which acquires information on a situation around the own vehicle 100 as surrounding information IS. In this embodiment, the surrounding information acquisition device 60 is equipped with electromagnetic wave sensors 61 and image sensors 62.

The electromagnetic wave sensor 61 is a device which acquires information on objects present in a surroundings, including a front, rear, left and right sides of the own vehicle 100, as object information IO. The electromagnetic wave sensor 61 is a sensor such as a millimeter wave radar. The electromagnetic wave sensors 61 are electrically connected to the ECU 90. The vehicle driving assistance apparatus 10 acquires the object information IO as the surrounding information IS.

The image sensor 62 is a device which captures images of the surroundings, including the front, rear, left and right sides of the own vehicle 100, and acquires image data on the surroundings of the own vehicle 100 as image information IC. The image sensor 62 is a sensor such as a camera. The image sensors 62 are electrically connected to the ECU 90. The vehicle driving assistance apparatus 10 acquires the image information IC as the surrounding information IS.

The road information acquisition device 70 is a device which acquires information on roads in an area in which the own vehicle 100 is moving as road information IR. In this embodiment, the road information acquisition device 70 is equipped with a GPS signal receiver 71 and a map database 72.

The GPS signal receiver 71 is a device which receives GPS signals. The GPS signal receiver 71 is electrically connected to the ECU 90. The vehicle driving assistance apparatus 10 acquires the GPS signals via the GPS signal receiver 71. The vehicle driving assistance apparatus 10 acquires a current position Pn of the own vehicle 100 based on the acquired GPS signals.

The map database 72 is a database which stores map data including information on roads. The map database 72 is electrically connected to the ECU 90. Based on the current position Pn of the own vehicle 100, the vehicle driving assistance apparatus 10 acquires information on a road on which the own vehicle 100 is expected to move as the road information IR from the map database 72.

<Operations of Vehicle Driving Assistance Apparatus>

Next, operations of the vehicle driving assistance apparatus 10 will be described.

When the execution of the eco-autonomous moving control is requested, the vehicle driving assistance apparatus 10 executes the eco-autonomous moving control as an autonomous moving control (or an autonomous driving control or an automatic driving control). In this embodiment, the eco-autonomous moving control includes an eco-inter-vehicle distance control and an eco-moving speed control.

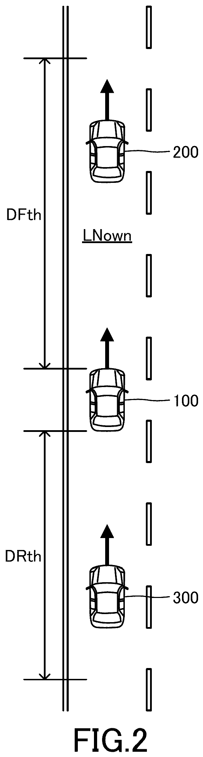

The eco-inter-vehicle distance control is a control of causing the own vehicle 100 to move autonomously by controlling an acceleration and a deceleration of the own vehicle 100 when a preceding vehicle 200 exists as shown in FIG. 2, such that an inter-vehicle distance DF goes back and forth between an upper limit inter-vehicle distance DFupper and a lower limit inter-vehicle distance DFlower.

More specifically, the eco-inter-vehicle distance control is a control of (i) causing the own vehicle 100 to coast by a coasting control when the inter-vehicle distance DF decreases and reaches the lower limit inter-vehicle distance DFlower while the own vehicle 100 is powered by a powering control and (ii) powering the own vehicle 100 by the powering control when the inter-vehicle distance DF increases and reaches the upper limit inter-vehicle distance DFupper while the own vehicle 100 is caused to coast by the coasting control.

The preceding vehicle 200 is a vehicle which moves in an own vehicle moving lane LNown within a range of a predetermined forward distance DFth ahead of the own vehicle 100. The own vehicle moving lane LNown is a traffic lane in which the own vehicle 100 is moving. The vehicle driving assistance apparatus 10 determines whether or not the preceding vehicle 200 exists based on the surrounding information IS. The vehicle driving assistance apparatus 10 also acquires the inter-vehicle distance DF based on the surrounding information IS.

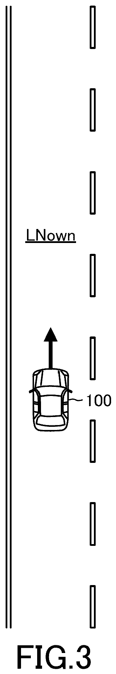

The eco-moving speed control is a control of causing the own vehicle 100 to move autonomously by controlling the acceleration and the deceleration of the own vehicle 100 such that the own vehicle moving speed V goes back and forth between an upper limit vehicle moving speed Vupper and a lower limit vehicle moving speed Vlower when the preceding vehicle 200 does not exist as shown in FIG. 3.

More specifically, the eco-moving speed control is a control of (i) causing the own vehicle 100 to coast by the coasting control when the own vehicle moving speed V increases and reaches the upper limit vehicle moving speed Vupper while the own vehicle 100 is powered by the powering control and (ii) powering the own vehicle 100 by the powering control when the own vehicle moving speed V decreases and reaches the lower limit vehicle moving speed Vlower while the own vehicle 100 is caused to coast by the coasting control.

It should be noted that the powering control is a control of powering the own vehicle 100 by applying the driving force to the own vehicle 100 by the driving apparatus 20. The coasting control is a control of causing the own vehicle 100 to coast by stopping the operation of the driving apparatus 20 and cutting off a driving force transmission path which applies the driving force from the driving apparatus 20 to the own vehicle 100.

The powering control may be an optimum powering control. The optimum powering control is a control of powering the own vehicle 100 by applying the driving force to the own vehicle 100 from the driving apparatus 20 while operating the driving apparatus 20 such that an amount of energy consumed by the driving apparatus 20 to generate the driving force is as low as possible.

In this embodiment, the upper limit vehicle moving speed Vupper is a set vehicle moving speed Vset. The set vehicle moving speed Vset is the moving speed of the own vehicle 100 requested by the driver as the moving speed of the own vehicle 100 for moving the own vehicle 100 by the eco-moving speed control. The driver can arbitrarily set the set vehicle moving speed Vset.

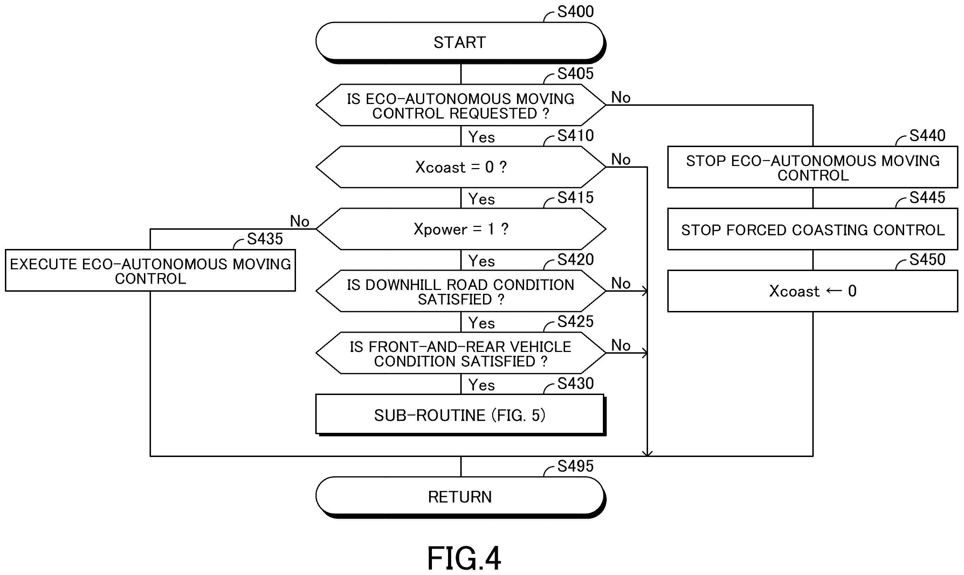

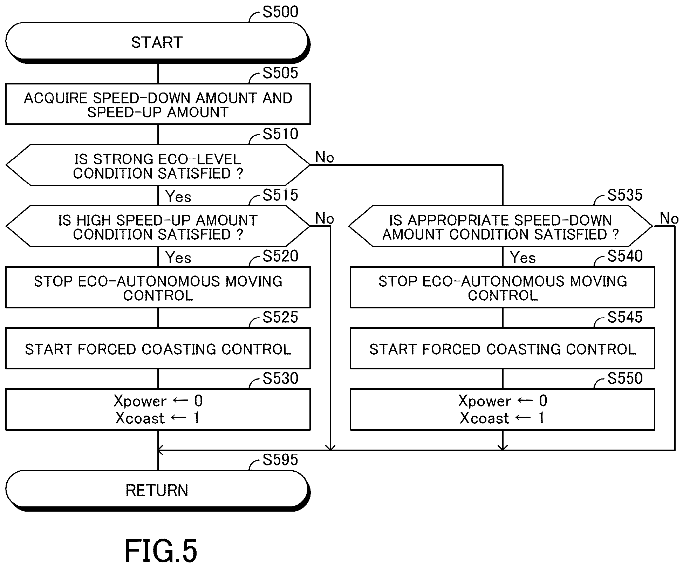

Next, a forced coasting control will be described. The vehicle driving assistance apparatus 10 executes routines shown in FIG. 4 and FIG. 5 at a predetermined calculation cycle to execute the forced coasting control, depending on various conditions. In this embodiment, the forced coasting control is the same control as the coasting control.

At a predetermined timing, the vehicle driving assistance apparatus 10 starts a process from a step S400 of the routine shown in FIG. 4, and proceeds with the process to a step S405 to determine whether or not the execution of the eco-autonomous moving control is requested.

When the execution of the eco-autonomous moving control is requested, the vehicle driving assistance apparatus 10 determines "Yes" at the step S405, and proceeds with the process to a step S410 to determine whether or not a value of a forced coasting control execution flag Xcoast is "0". The value of the forced coasting control execution flag Xcoast is set to "1" when the forced coasting control is executed. On the other hand, the value of the forced coasting control execution flag Xcoast is set to "0" when the forced coasting control is not executed.

When the value of the forced coasting control execution flag Xcoast is "0", the vehicle driving assistance apparatus 10 determines "Yes" at the step S410, and proceeds with the process to a step S415 to determine whether or not a value of a powering control execution flag Xpower is "1". The value of the powering control execution flag Xpower is set to "1" when the powering control is executed. On the other hand, the value of the powering control execution flag Xpower is set to "0" when the powering control is not executed.

When the value of the powering control execution flag Xpower is "1", the vehicle driving assistance apparatus 10 determines "Yes" at the step S415, and proceeds with the process to a step S420 to determine whether or not a downhill road condition C1 is satisfied.

The downhill road condition C1 is one of coasting permission conditions (or a first coasting permission condition) that the road located a predetermined distance (or a predetermined downhill road determination distance DSLth) ahead from the own vehicle 100 and on which the own vehicle 100 is expected to move, is a downhill road SLdown. The vehicle driving assistance apparatus 10 determines whether or not the downhill road condition C1 is satisfied based on the road information IR and/or the surrounding information IS.

When the downhill road condition C1 is satisfied, the vehicle driving assistance apparatus 10 determines "Yes" at the step S420, and proceeds with the process to a step S425 to determine whether or not a front-and-rear vehicle condition C2 is satisfied.

The front-and-rear vehicle condition C2 is one of the coasting permission conditions (or a second coasting permission condition) that the preceding vehicle 200 and a following vehicle 300 exist. As described above, the preceding vehicle 200 is another vehicle moving in the own vehicle moving lane LNown within the predetermined forward distance DFth from the own vehicle 100. Further, as shown in FIG. 2, the following vehicle 300 is another vehicle moving in the own vehicle moving lane LNown within a predetermined rearward distance DRth behind from the own vehicle 100. It should be noted that the own vehicle moving lane LNown is the traffic lane in which the own vehicle 100 is currently moving. The predetermined forward distance DFth and the predetermined rearward distance DRth may be either the same or different distances.

It should be noted that the vehicle driving assistance apparatus 10 determines whether or not the front-and-rear vehicle condition C2 is satisfied based on the surrounding information IS.

When the front-and-rear vehicle condition C2 is satisfied, the vehicle driving assistance apparatus 10 determines "Yes" at the step S425, and proceeds with the process to a step S430 to execute the routine shown in FIG. 5. Therefore, when the vehicle driving assistance apparatus 10 proceeds with the process to the step S430, the vehicle driving assistance apparatus 10 starts a process from a step S500 of the routine shown in FIG. 5, and proceeds with the process to a step S505 to acquire a speed-down amount $\Delta$Vdown and a speed-up amount $\Delta$Vup.

The speed-down amount $\Delta$Vdown is an amount by which the own vehicle moving speed V is expected to decrease until the own vehicle 100 reaches a downhill road start point SLstart (a point where the downhill road SLdown starts) if the own vehicle 100 starts coasting at the current time. In this embodiment, the vehicle driving assistance apparatus 10 acquires the speed-down amount $\Delta$Vdown by a following formula 1.

$$\Delta Vdown = -V + \sqrt{(V^2 + 2 \cdot (G + g \cdot \sin\theta1) \cdot D1)} \quad ...(1)$$

In the above formula 1, "V" is the own vehicle moving speed V, "G" is a coasting acceleration rate G, "g" is a gravitational acceleration rate g, "θ1" is a pre-downhill road gradient θ1, and "D1" is a pre-downhill road distance D1.

The pre-downhill road distance D1 is a distance between the current position Pn of the own vehicle 100 and the downhill road start point SLstart. The vehicle driving assistance apparatus 10 acquires the pre-downhill road distance D1 based on the road information IR.

The pre-downhill road gradient θ1 is a gradient of the road between the current position Pn of the own vehicle 100 and the downhill road start point SLstart. The vehicle driving assistance apparatus 10 acquires the pre-downhill road gradient θ1 based on the road information IR. It should be noted that in the above formula 1, the pre-downhill road gradient θ1 is zero when the road is flat, has a positive value when the road is uphill, and has a negative value when the road is downhill.

The coasting acceleration rate G is an acceleration rate of the own vehicle 100 when the own vehicle 100 coasts on a flat road (an even road or a road with a zero gradient). Therefore, the coasting acceleration rate G has a negative value, and its absolute value increases as a moving resistance of the own vehicle 100 increases. In other words, assuming that the moving resistance of the own vehicle 100 consists of a rolling resistance of tires of the own vehicle 100 and an air resistance of the own vehicle 100, the coasting acceleration rate G has a negative value, and its absolute value increases as both the rolling resistance and the air resistance increases.

Further, the coasting acceleration rate G has a negative value when the own vehicle 100 decelerates, and a positive value when the own vehicle 100 accelerates. However, when the own vehicle 100 coasts on the flat road, the own vehicle 100 decelerates, and the coasting acceleration rate G has a negative value.

In addition, in this embodiment, the road between the current position Pn of the own vehicle 100 and the downhill road start point SLstart is a flat road or an uphill road. When the own vehicle 100 coasts on the flat road or the uphill road, the own vehicle moving speed V decreases. Therefore, the speed-down amount ΔVdown acquired by the above formula 1 has a negative value.

Alternatively, the vehicle driving assistance apparatus 10 may be configured to acquire the speed-down amount ΔVdown by a following formula 2.

$$\Delta Vdown = (G + g \cdot \sin\theta1) \cdot D1/Vset \quad ...(2)$$

In the above formula 2, "G" is the coasting acceleration rate G, "g" is the gravitational acceleration g, "θ1" is the pre-downhill road gradient θ1, and "D1" is the pre-downhill road distance D1. Further, in the above formula 2, "Vset" is the set vehicle moving speed Vset (i.e., the upper limit vehicle moving speed Vupper).

It should be noted that, like the speed-down amount ΔVdown acquired by the above formula 1, the speed-down amount ΔVdown acquired by the above formula 2 also has a negative value. Also, the speed-down amount ΔVdown acquired by the above formula 2 is an amount by which the own vehicle moving speed V decreases during a time required for the own vehicle 100 to move the pre-downhill road distance D1 at the set vehicle moving speed Vset. In other words, the speed-down amount ΔVdown acquired by the above formula 2 is a minimum amount of decrease in the own vehicle moving speed V until the own vehicle 100 reaches the downhill road start point SLstart if the own vehicle 100 starts coasting at the current time.

On the other hand, the speed-up amount ΔVup is an amount by which the own vehicle moving speed V increases when the own vehicle 100 coasts from the downhill road start point SLstart to a downhill road end point SLend (i.e., a point where the downhill road SLdown ends). In this embodiment, the vehicle driving assistance apparatus 10 acquires the speed-up amount ΔVup by a following formula 3.

$$\Delta Vup = -V + \sqrt{(V^2 + 2 \cdot (G + g \cdot \sin\theta2) \cdot D2)} \quad ...(3)$$

In the above formula 3 as well, "V" is the own vehicle moving speed V, "G" is the coasting acceleration rate G, and "g" is the gravitational acceleration g. In addition, in the above formula 3, "θ2" is a downhill road gradient θ2, and "D2" is a downhill road distance D2.

The downhill road distance D2 is a distance between the downhill road start point SLstart and the downhill road end point SLend. In other words, the downhill road distance D2 is a distance of the downhill road SLdown. The vehicle driving assistance apparatus 10 acquires the downhill road distance D2 based on the road information IR.

The downhill road gradient θ2 is a gradient of the downhill road SLdown. The vehicle driving assistance apparatus 10 acquires the downhill road gradient θ2 based on the road information IR. It should be noted that in the above formula 3, the downhill road gradient θ2 has a negative value.

The speed-up amount ΔVup acquired by the above formula 3 has a positive value except when the downhill road gradient θ2 is extremely small.

Alternatively, the vehicle driving assistance apparatus 10 may be configured to acquire the speed-up amount ΔVup by a following formula 4.

$$\Delta Vup = (G + g \cdot \sin\theta2) \cdot D2/Vset \quad ...(4)$$

In the above formula 4, "G" is the coasting acceleration rate G, "g" is the gravitational acceleration g, "θ2" is the downhill road gradient θ2, "D2" is the downhill road distance D2, and "Vset" is the set vehicle moving speed Vset (i.e., the upper limit vehicle moving speed Vupper).

It should be noted that, like the speed-up amount ΔVup acquired by the above formula 3, the speed-up amount ΔVup acquired by the above formula 4 also has a positive value. Furthermore, the speed-up amount ΔVup acquired by the above formula 4 is the amount of increase in the own vehicle moving speed V during the time required for the own vehicle 100 to move the downhill road distance D2 at the set vehicle moving speed Vset. In other words, the speed-up amount ΔVup acquired by the above equation 4 is a minimum amount of increase in the own vehicle moving speed V when vehicle 100 starts coasting at the downhill road start point SLstart and reaches the downhill road end point SLend.

Next, the vehicle driving assistance apparatus 10 proceeds with the process to a step S510 to determine whether or not a strong eco-level condition C3 is satisfied.

The strong eco-level condition C3 is a condition that the required eco-level LVreq is equal to or higher than a predetermined eco-level LVth. In this embodiment, the strong eco-level condition C3 is satisfied when the required eco-level LVreq is set to the strong eco-level LVs.

When the strong eco-level condition C3 is satisfied, the vehicle driving assistance apparatus 10 determines "Yes" at the step S510, and proceeds with the process to a step S515 to determine whether or not a high speed-up amount condition C4 is satisfied.

The high speed-up amount condition C4 is one of the coasting permission conditions (or a third coasting permission condition) that the own vehicle moving speed V reaches the upper limit vehicle moving speed Vupper when the own vehicle 100 reaches the downhill road end point SLend if the own vehicle 100 starts coasting at the current time and is allowed to coast to the downhill road end point SLend. That is, the high speed-up amount condition C4 is satisfied when a following formula 5 is satisfied.

$$(Vupper - V) + |\Delta Vdown| \leq \Delta Vup \quad ...(5)$$

In the above formula 5, "Vupper" is the upper limit vehicle moving speed Vupper, "V" is the own vehicle moving speed V, "$\Delta Vdown$" is the speed-down amount $\Delta Vdown$, and "$\Delta Vup$" is the speed-up amount $\Delta Vup$.

Therefore, when the downhill road condition C1 becomes satisfied while the distance between the current position Pn of the own vehicle 100 and the downhill road start point SLstart is sufficiently long, the high speed-up amount condition C4 becomes satisfied at a timing when the own vehicle moving speed V reaches the upper limit vehicle moving speed Vupper when the own vehicle 100 reaches the downhill road end point SLend if the own vehicle 100 starts coasting at the current time and is allowed to coast to the downhill road end point SLend.

It should be noted that the high speed-up amount condition C4 becomes satisfied when the own vehicle moving speed V reaches or exceeds a certain vehicle moving speed. In addition, the high speed-up amount condition C4 becomes satisfied at the lower own vehicle moving speed V as the speed-up amount $\Delta Vup$ increases. Therefore, it can be said that the high speed-up amount condition C4 becomes satisfied when the own vehicle moving speed V is lower than the upper limit vehicle moving speed Vupper and higher than or equal to a predetermined vehicle moving speed Vth_1. Further, it can be said that the predetermined vehicle moving speed Vth_1 is a vehicle moving speed lower than the upper limit vehicle moving speed Vupper. In addition, he predetermined vehicle moving speed Vth_1 is set to a lower vehicle moving speed as the speed-up amount $\Delta Vup$ (i.e., the amount of increase in the own vehicle moving speed V while the own vehicle 100 is moving on the downhill road SLdown) increases. The predetermined vehicle moving speed Vth_1 is, for example, a vehicle moving speed expressed by a following formula 6.

$$Vth\_1 = Vupper - (\Delta Vup - \Delta Vdown) \quad ...(6)$$

Furthermore, it can be said that the high speed-up amount condition C4 becomes satisfied when the pre-downhill road distance D1 becomes equal to or smaller than a predetermined distance Dth_1. In this case, the high speed-up amount condition C4 becomes satisfied when the pre-downhill road distance D1 is greater as the speed-up amount $\Delta Vup$ increases. Therefore, it can be said that the high speed-up amount condition C4 becomes satisfied when the distance between the own vehicle 100 and the downhill road start point SLstart is equal to or less than the predetermined distance Dth_1, and the predetermined distance Dth_1 is set to a greater distance as the speed-up amount $\Delta Vup$ (i.e., the amount of increase in the own vehicle moving speed V while the own vehicle 100 is moving on the downhill road SLdown) increases. The predetermined distance Dth_1 is, for example, a distance for which a relationship expressed by a following formula 7 is satisfied.

$$(Vupper - V) + \Delta Vdown = \Delta Vup \quad ...(7)$$

Furthermore, the high speed-up amount condition C4 is also satisfied when the speed-up amount $\Delta Vup$ (the amount of increase in the own vehicle moving speed V while the own vehicle 100 is moving on the downhill road SLdown) is equal to or greater than a control width Wcontrol (i.e., a difference between the upper limit vehicle moving speed Vupper and the lower limit vehicle moving speed Vlower).

Furthermore, the high speed-up amount condition C4 may become satisfied when a following formula 8 becomes satisfied.

$$(Vupper - V) + |\Delta Vdown| \leq Min(\Delta Vth, \Delta Vup) \quad ...(8)$$

(Vupper - V) + |ΔVdown | ≤ Min(ΔVth, ΔVup) ...(8)

In the above formula 8, "Vupper" is the upper limit vehicle moving speed Vupper, "V" is the own vehicle moving speed V, "ΔVdown" is the speed-down amount ΔVdown, and "ΔVup" is the speed-up amount ΔVup. Further, "ΔVth" is a predetermined arbitrary value which is greater than the control width Wcontrol. The control width Wcontrol is a difference between the upper limit vehicle moving speed Vupper and the lower limit vehicle moving speed Vlower (Wcontrol = Vupper - Vlower).

Thereby, when the speed-up amount ΔVup is greater than the value ΔVth, the speed-up amount ΔVup is limited to the value ΔVth. Therefore, it is possible to prevent the own vehicle moving speed V from becoming very low due to the speed-up amount ΔVup being very great.

When the high speed-up amount condition C4 is satisfied, the vehicle driving assistance apparatus 10 determines "Yes" at the step S515, and proceeds with the process to a step S520 to stop executing the eco-autonomous moving control. Next, the vehicle driving assistance apparatus 10 proceeds with the process to a step S525 to start to execute the forced coasting control.

Then, the vehicle driving assistance apparatus 10 proceeds with the process to a step S530 to set the value of the powering control execution flag Xpower to "0", and set the value of the forced coasting control execution flag Xcoast to "1". Next, the vehicle driving assistance apparatus 10 proceeds with the process to a step S595 to terminate executing this routine once. Thereby, the forced coasting control is started, and the own vehicle moving speed V decreases.

On the other hand, when the high speed-up amount condition C4 is not satisfied, the vehicle driving assistance apparatus 10 determines "No" at the step S515, and proceeds with the process directly to the step S595 to terminate executing this routine once. In this case, the eco-autonomous moving control continues.

When the strong eco-level condition C3 is not satisfied, the vehicle driving assistance apparatus 10 determines "No" at the step S510, and proceeds with the process to a step S535 to determine whether or not an appropriate speed-down amount condition C5 is satisfied.

The appropriate speed-down amount condition C5 is one of the coasting permission conditions (or a fourth coasting permission condition) that even if the own vehicle 100 starts coasting at the current time, the own vehicle moving speed V does not fall below the lower limit vehicle moving speed Vlower at a point of time when the own vehicle 100 reaches the downhill road start point SLstart. That is, the appropriate speed-down amount condition C5 is satisfied when the following formula 9 is satisfied.

$$(Vupper - V) + |\Delta Vdown| \leq Min(Wcontrol, \Delta Vup) \quad ...(9)$$

In the above formula 9, "Vupper" is the upper limit vehicle moving speed Vupper, "V" is the own vehicle moving speed V, "ΔVdown" is the speed-down amount ΔVdown, "Wcontrol" is the control width Wcontrol, and "ΔVup" is the speed-up amount ΔVup.

Therefore, when the downhill road condition C1 becomes satisfied while the distance between the current position Pn of the own vehicle 100 and the downhill road start point SLstart is sufficiently long, the appropriate speed-down amount condition C5 becomes satisfied at a timing when the own vehicle moving speed V reaches the lower limit vehicle moving speed Vlower at a point of time when the own vehicle 100 reaches the downhill road start point SLstart if the own vehicle 100 starts coasting at the current time.

It should be noted that the appropriate speed-down amount condition C5 becomes satisfied when the own vehicle moving speed V becomes equal to or greater than a certain vehicle moving speed. In addition, the appropriate speed-down amount condition C5 becomes satisfied at the lower own vehicle moving speed V as the speed-up amount ΔVup increases. Therefore, it can be said that (i) the appropriate speed-down amount condition C5 is satisfied when the own vehicle moving speed V is lower than the upper limit vehicle moving speed Vupper and equal to or higher than a predetermined vehicle moving speed Vth_2, and (ii) the predetermined vehicle moving speed Vth_2 is a vehicle moving speed which is lower than the upper limit vehicle moving speed Vupper and equal to or higher than the lower limit vehicle moving speed Vlower, and is set to a lower vehicle moving speed as the speed-up amount ΔVup (i.e., the amount of increase in the own vehicle moving speed V while the own vehicle 100 is moving on the downhill road SLdown) increases.

Further, it can be said that the appropriate speed-down amount condition C5 becomes satisfied when the pre-downhill road distance D1 becomes equal to or less than a predetermined distance Dth_2. In this case, the appropriate speed-down amount condition C5 becomes satisfied when the pre-downhill road distance D1 is greater as the speed-up amount ΔVup increases. Therefore, it can be said that the appropriate speed-down amount condition C5 is satisfied when the distance between the own vehicle 100 and the downhill road start point SLstart is equal to or less than the predetermined distance Dth_2, and the predetermined distance Dth_2 is set to a greater distance as the speed-up amount ΔVup (i.e., the amount of increase in the own vehicle moving speed V while the own vehicle 100 is moving on the downhill road SLdown) increases.

Furthermore, when the appropriate speed-down amount condition C5 becomes satisfied, and the own vehicle 100 starts coasting, the own vehicle moving speed V reaches the lower limit vehicle moving speed Vlower when the own vehicle 100 reaches the downhill road start point SLstart. Therefore, it can be said that the appropriate speed-down amount condition C5 becomes satisfied when the own vehicle moving speed V reaches the lower limit vehicle moving speed Vlower at a point of time when the own vehicle 100 reaches the downhill road start point SLstart if the own vehicle 100 starts coasting at the current time.

When the appropriate speed-down amount condition C5 is satisfied, the vehicle driving assistance apparatus 10 determines "Yes" at the step S535, and proceeds with the process to a step S540 to stop executing the eco-autonomous moving control. Next, the vehicle driving assistance apparatus 10 proceeds with the process to a step S545 to start executing the forced coasting control. Next, the vehicle driving assistance apparatus 10 proceeds with the process to a step S550 to set the value of the powering control execution flag Xpower to "0" and set the value of the forced coasting control execution flag Xcoast to "1". Next, the vehicle driving assistance apparatus 10 proceeds with the process to the step S595 to terminate executing this routine once. Thereby, the forced coasting control is started, and the own vehicle moving speed V decreases.

On the other hand, when the appropriate speed-down amount condition C5 is not satisfied, the vehicle driving assistance apparatus 10 determines "No" at the step S535, and proceeds with the process directly to the step S595 to terminate executing this routine once. In this case, the eco-autonomous moving control continues.

When the value of the forced coasting control execution flag Xcoast is "1" at the time of executing the process of the step S410 of the routine shown in FIG. 4, the vehicle driving assistance apparatus 10 determines "No" at the step S410, and proceeds with the process directly to a step S495 to terminate executing this routine once. In this case, the forced coasting control continues.

When the downhill road condition C1 is not satisfied at the time of executing the process of the step S420, the vehicle driving assistance apparatus 10 determines "No" at the step S420, and proceeds with the process directly to the step S495 to terminate executing this routine once. In this case, the eco-autonomous moving control continues.

When the front-and-rear vehicle condition C2 is not satisfied at the time of executing the process of the step S425, the vehicle driving assistance apparatus 10 determines "No" at the step S425, and proceeds with the process directly to the step S495 to terminate executing this routine once. In this case, the eco-autonomous moving control continues.

When the value of the powering control execution flag Xpower is "0" at the time of executing the process of the step S415, the vehicle driving assistance apparatus 10 determines "No" at the step S415, and proceeds with the process to a step S435 to execute the eco-autonomous moving control. Next, the vehicle driving assistance apparatus 10 proceeds with the process to the step S495 to terminate executing this routine once.

When the execution of the eco-autonomous moving control is not requested at the time of executing the process of the process of the step S405, the vehicle driving assistance apparatus 10 determines "No" at the step S405, and proceeds with the process to a step S440 to stop executing the eco-autonomous moving control if it is being executed. Next, the vehicle driving assistance apparatus 10 proceeds with the process to a step S445 to stop executing the forced coasting control if it is being executed. Next, the vehicle driving assistance apparatus 10 proceeds with the process to a step S450 to set the value of the forced coasting control execution flag Xcoast to "0". Next, the vehicle driving assistance apparatus 10 proceeds with the process to the step S495 to terminate executing this routine once.

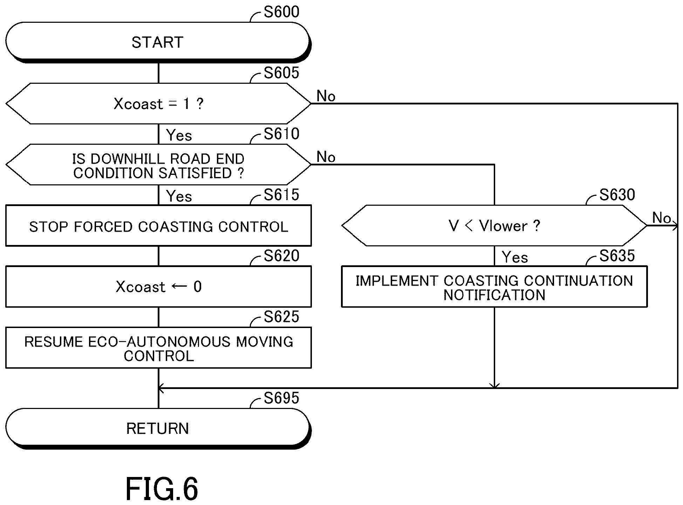

Further, the vehicle driving assistance apparatus 10 is configured to execute a routine shown in FIG. 6 at the predetermined calculation cycle. Therefore, at a predetermined timing, the vehicle driving assistance apparatus 10 starts a process from a step S600 of the routine shown in FIG. 6, and proceeds with the process to a step S605 to determine whether or not the value of the forced coasting control execution flag Xcoast is "1".

When the value of the forced coasting control execution flag Xcoast is "1", the vehicle driving assistance apparatus 10 determines "Yes" at the step S605, and proceeds with the process to a step S610 to determine whether or not a downhill road end condition C6 is satisfied. The downhill road end condition C6 is a condition that the own vehicle 100 reaches the downhill road end point SLend. The vehicle driving assistance apparatus 10 determines whether or not the downhill road end condition C6 is satisfied based on the surrounding information IS.

When the downhill road end condition C6 is satisfied, the vehicle driving assistance apparatus 10 determines "Yes" at the step S610, and proceeds with the process to a step S615 to stop executing the forced coasting control. Next, the vehicle driving assistance apparatus 10 proceeds with the process to a step S620 to set the value of the powering control execution flag Xpower to "0". Next, the vehicle driving assistance apparatus 10 proceeds with the process to a step S625 to resume the eco-autonomous moving control. Next, the vehicle driving assistance apparatus 10 proceeds with the process to a step S695 to terminate executing this routine once.

On the other hand, when the downhill road end condition C6 is not satisfied, the vehicle driving assistance apparatus 10 determines "No" at the step S610, and proceeds with the process to a step S630 to determine whether or not the own vehicle moving speed V is lower than the lower limit vehicle moving speed Vlower.

When the own vehicle moving speed V is lower than the lower limit vehicle moving speed Vlower, the vehicle driving assistance apparatus 10 determines "Yes" at the step S630, and proceeds with the process to a step S635 to implement a coasting continuation notification. Next, the vehicle driving assistance apparatus 10 proceeds with the process to the step S695 to terminate executing this routine once.

The coasting continuation notification is a notification to inform the driver that the own vehicle 100 is kept coasting since the downhill road SLdown exists on the road on which the own vehicle 100 is expected to move. Therefore, in this case, the coasting continuation notification is implemented, and the forced coasting control continues. That is, when the own vehicle moving speed V becomes lower than the lower limit vehicle moving speed Vlower after the high speed-up amount condition C4 (the third coasting permission condition) becomes satisfied and as a result, the own vehicle 100 starts coasting, the vehicle driving assistance apparatus 10 is configured to implement the coasting continuation notification to the driver and keep the own vehicle 100 coasting.

On the other hand, when the own vehicle moving speed V is equal to or higher than the lower limit vehicle moving speed Vlower, the vehicle driving assistance apparatus 10 determines "No" at the step S630, and proceeds with the process directly to the step S695 to terminate executing this routine once.

When the value of the forced coasting control execution flag Xcoast is "0" at the time of executing the process of the step S605, the vehicle driving assistance apparatus 10 determines "No" at the step S605, and proceeds with the process directly to the step S695 to terminate executing this routine once.

The above is the operations of the vehicle driving assistance apparatus 10.

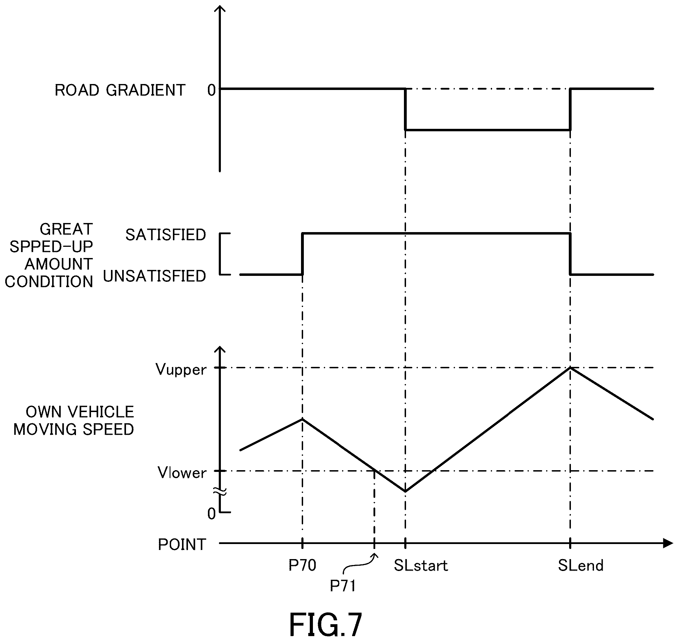

According to the vehicle driving assistance apparatus 10, when the process proceeds to the step S525 of the routine shown in FIG. 5 and the forced coasting control is started, the own vehicle moving speed V changes, for example, as shown in FIG. 7.

In an example shown in FIG. 7, the road up to the downhill road start point SLstart is a flat road. Therefore, the pre-downhill road gradient θ1 is zero. The road from the downhill road start point SLstart to the downhill road end point SLend is the downhill road SLdown. Therefore, the downhill road gradient θ2 has a negative value. The road after the downhill road end point SLend is a flat road. Therefore, the road gradient after the downhill road end point SLend is zero.

In the example shown in FIG. 7, the high speed-up amount condition C4 becomes satisfied when the own vehicle 100 reaches a point P70. Furthermore, before the own vehicle 100 reaches the point P70, the eco-autonomous moving control is executed. In the example shown in FIG. 7, before the own vehicle 100 reaches the point P70, the powering control of the eco-autonomous moving control is executed. Therefore, the own vehicle moving speed V increases.

When the own vehicle 100 reaches the point P70, the high speed-up amount condition C4 becomes satisfied, and the forced coasting control is started. At this time, the own vehicle 100 is moving on the flat road. Therefore, the own vehicle moving speed V starts decreasing.

Thereafter, when the own vehicle 100 reaches a point P71, the own vehicle moving speed V falls below the lower limit vehicle moving speed Vlower. Therefore, the coasting continuation notification is implemented.

Thereafter, when the own vehicle 100 reaches the downhill road start point SLstart, the own vehicle moving speed V starts increasing. The own vehicle moving speed V continues increasing until the own vehicle 100 reaches the downhill road end point SLend. When the own vehicle 100 reaches the downhill road end point SLend, the own vehicle moving speed V reaches the upper limit vehicle moving speed Vupper.

When the own vehicle 100 reaches the downhill road end point SLend, the forced coasting control is stopped and the eco-autonomous moving control is resumed. At this time, the own vehicle moving speed V has reached the upper limit vehicle moving speed Vupper. Therefore, the coasting control of the eco-autonomous moving control is executed. The road after the downhill road end point SLend is a flat road. Therefore, after the own vehicle 100 passes the downhill road end point SLend, the own vehicle moving speed V decreases.

Accordingly, when the high speed-up amount condition C4 becomes satisfied, the own vehicle 100 starts coasting even if the own vehicle moving speed V does not reach the upper limit vehicle moving speed Vupper. Therefore, when the own vehicle 100 reaches the downhill road start point SLstart, the own vehicle moving speed V is sufficiently low. Therefore, while the own vehicle 100 is moving on the downhill road SLdown, the own vehicle 100 can be kept coasting for a long distance. As a result, the consumed energy amount can be reduced.

Furthermore, the own vehicle 100 can be kept coasting until the own vehicle 100 reaches the downhill road end point SLend. In addition, the own vehicle 100 can be kept coasting for a while even after the own vehicle 100 passes the downhill road end point SLend. Therefore, the consumed energy amount can be further reduced.

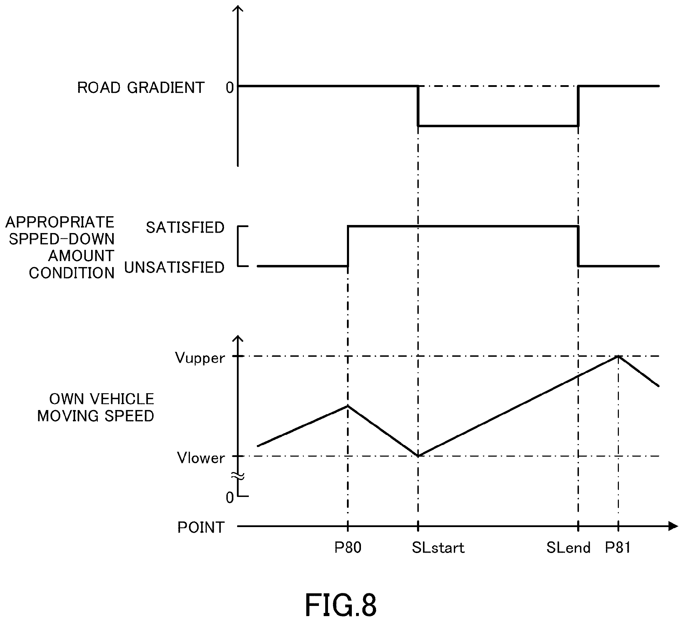

On the other hand, when the process proceeds to the step S545 of the routine shown in FIG. 5 and the forced coasting control is started, the own vehicle moving speed V changes, for example, as shown in FIG. 8.

In an example shown in FIG. 8, the road up to the downhill road start point SLstart is a flat road. Therefore, the pre-downhill road gradient θ1 is zero. The road from the downhill road start point SLstart to the downhill road end point SLend is the downhill road SLdown. Therefore, the downhill road gradient θ2 has a negative value. The road after the downhill road end point SLend is a flat road. Therefore, the road gradient after the downhill road end point SLend is zero.

In the example shown in FIG. 8, the appropriate speed-down amount condition C5 becomes satisfied when the own vehicle 100 reaches a point P80. Before the own vehicle 100 reaches the point P80, the eco-autonomous moving control is executed. In the example shown in FIG. 8, before the own vehicle 100 reaches the point P80, the powering control of the eco-autonomous moving control is executed. Therefore, the own vehicle moving speed V increases.

When the own vehicle 100 reaches the point P80, the appropriate speed-down amount condition C5 becomes satisfied, and the forced coasting control is started. At this time, the own vehicle 100 is moving on the flat road. Therefore, the own vehicle 100 starts decreasing.

Thereafter, when the own vehicle 100 reaches the downhill road start point SLstart, the own vehicle moving speed V reaches the lower limit vehicle moving speed Vlower. When the own vehicle 100 reaches the downhill road start point SLstart, the own vehicle 100 starts increasing. The own vehicle moving speed V continues increasing until the own vehicle 100 reaches the downhill road end point SLend.

When the own vehicle 100 reaches the downhill road end point SLend, the forced coasting control is stopped, and the eco-autonomous moving control is resumed. At this time, since the own vehicle moving speed V does not reach the upper limit vehicle moving speed Vupper, the powering control of the eco-autonomous moving control is executed. Therefore, the own vehicle moving speed V increases. When the own vehicle 100 reaches a point P81, the own vehicle moving speed V reaches the upper limit vehicle moving speed Vupper, and the coasting control of the eco-autonomous moving control is started. Therefore, the own vehicle moving speed V starts decreasing.

Accordingly, when the appropriate speed-down amount condition C5 becomes satisfied, the own vehicle 100 starts coasting even if the own vehicle moving speed V does not reach the upper limit vehicle moving speed Vupper. Therefore, when the own vehicle 100 reaches the downhill road start point SLstart, the own vehicle moving speed V is sufficiently low. Therefore, while the own vehicle 100 is moving on the downhill road SLdown, the own vehicle 100 can be kept coasting for a long distance. As a result, the consumed energy amount can be reduced.

It should be noted that the present invention is not limited to the aforementioned embodiments, and various modifications can be employed within the scope of the present invention.

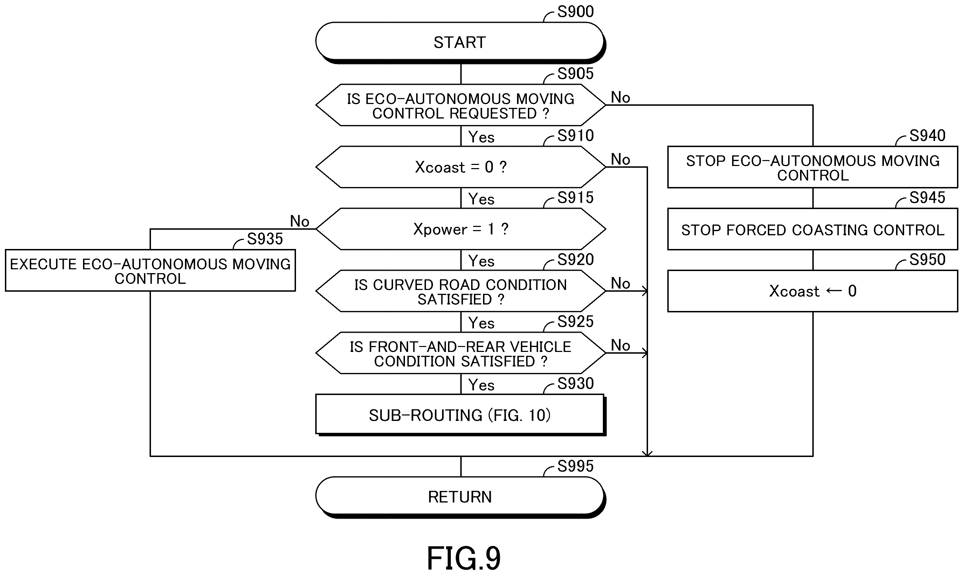

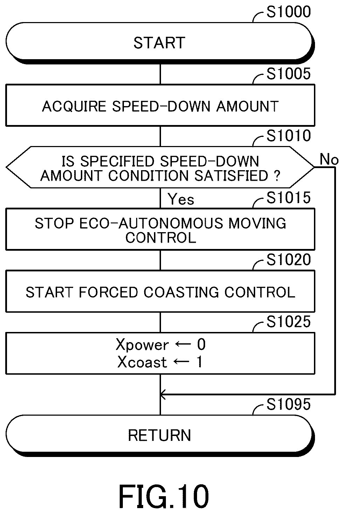

For example, the vehicle driving assistance apparatus 10 may be configured to execute routines shown in FIG. 9 and FIG. 10. The vehicle driving assistance apparatus 10 executes the forced coasting control when a predetermined condition becomes satisfied by executing the routines shown in FIG. 9 and FIG. 10.

Therefore, at a predetermined timing, the vehicle driving assistance apparatus 10 starts a process from a step S900 of the routine shown in FIG. 9, and proceeds with the process to a step S905 to determine whether or not the execution of the eco-autonomous moving control is requested.

When the execution of the eco-autonomous moving control is requested, the vehicle driving assistance apparatus 10 determines "Yes" at the step S905, and proceeds with the process to a step S910 to determine whether or not the value of the forced coasting control execution flag Xcoast is "0".

When the value of the forced coasting control execution flag Xcoast is "0", the vehicle driving assistance apparatus 10 determines "Yes" at the step S910, and proceeds with the process to a step S915 to determine whether or not the value of the powering control execution flag Xpower is "1".

When the value of the powering control execution flag Xpower is "1", the vehicle driving assistance apparatus 10 determines "Yes" at the step S915, and proceeds with the process to a step S920 to determine whether or not a curved road condition C8 is satisfied.

The curved road condition C8 is one of the coasting permission conditions (or a fifth coasting permission condition) that a road located a predetermined distance (or a predetermined curved road determination distance DCth) ahead from the own vehicle 100 and on which the own vehicle 100 is expected to move, is a curved road CV. The vehicle driving assistance apparatus 10 determines whether or not the curved road condition C8 is satisfied based on the road information IR and/or the surrounding information IS.

When the curved road condition C8 is satisfied, the vehicle driving assistance apparatus 10 determines "Yes" at the step S920, and proceeds with the process to a step S925 to determine whether or not the front-and-rear vehicle condition C2 is satisfied.

When the front-and-rear vehicle condition C2 is satisfied, the vehicle driving assistance apparatus 10 determines "Yes" at the step S925, and proceeds with the process to a step S930 to execute the routine shown in FIG. 10. Therefore, when the vehicle driving assistance apparatus 10 proceeds with the process to the step S925, the vehicle driving assistance apparatus 10 starts a process from a step S1000 of the routine shown in FIG. 10, and proceeds with the process to a step S1005 to acquire the speed-down amount ΔVdown.

The speed-down amount ΔVdown is an amount by which the own vehicle moving speed V decreases until the own vehicle 100 reaches a curved road start point CVstart (i.e., a point where the curved road CV starts) if the own vehicle 100 starts coasting at the current time. In this embodiment, the vehicle driving assistance apparatus 10 acquires the speed-down amount ΔVdown by the above formula 1.

Next, the vehicle driving assistance apparatus 10 proceeds with the process to a step S1010 to determine whether or not a specified speed-down amount condition C9 is satisfied.

The specified speed-down amount condition C9 is one of the coasting permission conditions (or a sixth coasting permission condition) that if the own vehicle 100 starts coasting and is allowed to coast to the curved road start point CVstart, the own vehicle moving speed V reaches a recommended vehicle moving speed Vrec when the own vehicle 100 reaches the curved road start point CVstart. That is, the specified speed-down amount condition C9 is satisfied when a following formula 10 is satisfied.

$$V - |\Delta Vdown| = Vrec \quad ...(10)$$

V - |ΔVdown | = Vrec ...(10)

In the above formula 10, "V" is the own vehicle moving speed V, "ΔVdown" is the speed-down amount ΔVdown, and "Vrec" is the recommended vehicle moving speed Vrec.

The recommended vehicle moving speed Vrec is the vehicle moving speed recommended for the own vehicle 100 to move on the curved road CV existing the predetermined curved road determination distance DCth ahead from the own vehicle 100 and on which the own vehicle 100 is expected to move.

When the specified speed-down amount condition C9 is satisfied, the vehicle driving assistance apparatus 10 determines "Yes" at the step S1010, and proceeds with the process to a step S1015 to stop executing the eco-autonomous moving control. Next, the vehicle driving assistance apparatus 10 proceeds with the process to a step S1020 to start executing the forced coasting control. Next, the vehicle driving assistance apparatus 10 proceeds with the process to a step S1025 to set the value of the powering control execution flag Xpower to "0", and set the value of the forced coasting control execution flag Xcoast to "1". Next, the vehicle driving assistance apparatus 10 proceeds with the process to a step S1095 to terminate executing this routine once. Thereby, the forced coasting control is started. Therefore, the own vehicle moving speed V decreases.

On the other hand, when the specified speed-down amount condition C9 is not satisfied, the vehicle driving assistance apparatus 10 determines "No" at the step S1010, and proceeds with the process directly to the step S1095 to terminate executing this routine once. In this case, the eco-autonomous moving control continues.

When the value of the forced coasting control execution flag Xcoast is "1" at the time of executing the process of the step S910 of the routine shown in FIG. 9, the vehicle driving assistance apparatus 10 determines "No" at the step S910, and proceeds with the process directly to a step S995 to terminate executing this routine once. In this case, the forced coasting control continues.

When the curved road condition C8 is not satisfied at the time of executing the process of the step S920, the vehicle driving assistance apparatus 10 determines "No" at the step S920, and proceeds with the process directly to the step S995 to terminate executing this routine once. In this case, the eco-autonomous moving control continues.

When the front-and-rear vehicle condition C2 is not satisfied at the time of executing the process of the step S925, the vehicle driving assistance apparatus 10 determines "No" at the step S925, and proceeds with the process directly to the step S995 to terminate executing this routine once. In this case, the eco-autonomous moving control continues.

When the value of the powering control execution flag Xpower is "0" at the time of executing the process of the step S915, the vehicle driving assistance apparatus 10 determines "No" at the step S915, and proceeds with the process to a step S935 to execute the eco-autonomous moving control. Next, the vehicle driving assistance apparatus 10 proceeds with the process to the step S995 to terminate executing this routine once.

When the execution of the eco-autonomous moving control is not requested at the time of executing the process of the step S905, the vehicle driving assistance apparatus 10 determines "No" at the step S905, and proceeds with the process to a step S940 to stop executing the eco-autonomous moving control if it is being executed. Next, the vehicle driving assistance apparatus 10 proceeds with the process to a step S945 to stop executing the forced coasting control if it is being executed. Next, the vehicle driving assistance apparatus 10 proceeds with the process to a step S950 to set the value of the forced coasting control execution flag Xcoast to "0". Next, the vehicle driving assistance apparatus 10 proceeds with the process to the step S995 to terminate executing this routine once.

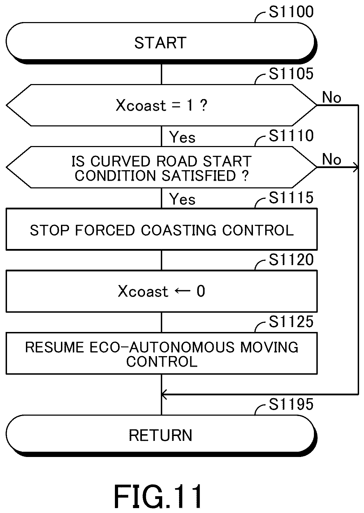

The vehicle driving assistance apparatus 10 also executes a routine shown in FIG. 11 at the predetermined calculation cycle. Therefore, at a predetermined timing, the vehicle driving assistance apparatus 10 starts a process from a step S1100 of the routine shown in FIG. 11, and proceeds with the process to a step S1105 to determine whether or not the value of the forced coasting control execution flag Xcoast is "1".

When the value of the forced coasting control execution flag Xcoast is "1", the vehicle driving assistance apparatus 10 determines "Yes" at the step S1105, and proceeds with the process to a step S1110 to determine whether or not a curved road start condition C10 is satisfied. The curved road start condition C10 is a condition that the own vehicle 100 reaches the curved road start point CVstart. The vehicle driving assistance apparatus 10 determines whether or not the curved road start condition C10 is satisfied based on the surrounding information IS and/or the road information IR.

When the curved road start condition C10 is satisfied, the vehicle driving assistance apparatus 10 determines "Yes" at the step S1110, and proceeds with the process to a step S1115 to stop executing the forced coasting control. Next, the vehicle driving assistance apparatus 10 proceeds with the process to a step S1120 to set the value of the forced coasting control execution flag Xcoast to "0". Next, the vehicle driving assistance apparatus 10 proceeds with the process to a step S1125 to resume the eco-autonomous moving control. Next, the vehicle driving assistance apparatus 10 proceeds with the process to a step S1195 to terminate executing this routine once.

On the other hand, when the curved road start condition C10 is not satisfied, the vehicle driving assistance apparatus 10 determines "No" at the step S1110, and proceeds with the process directly to the step S1195 to terminate executing this routine once.

When the value of the forced coasting control execution flag Xcoast is "0" at the time of executing the process of the step S1105, the vehicle driving assistance apparatus 10 determines "No" at the step S1105, and proceeds with the process directly to the step S1195 to terminate executing this routine once.

Accordingly, when the specified speed-down amount condition C9 becomes satisfied, the own vehicle 100 starts coasting even if the own vehicle 100 does not reach the upper limit vehicle moving speed Vupper. Then, the own vehicle 100 is kept coasting until the own vehicle 100 reaches the curved road start point CVstart. Therefore, the consumed energy amount can be reduced.

**Claims**

1. A vehicle driving assistance apparatus (10), comprising an electronic control unit (90) for executing an autonomous moving control of causing an own vehicle (100) to move autonomously by increasing and decreasing a vehicle moving speed of the own vehicle (100) between a predetermined upper limit vehicle moving speed and a predetermined lower limit vehicle moving speed,

   the electronic control unit (90) being configured to:

   cause the own vehicle (100) to coast when the vehicle moving speed increases and reaches the predetermined upper limit vehicle moving speed while executing the autonomous moving control; and
   power the own vehicle (100) when the vehicle moving speed decreases and reaches the predetermined lower limit vehicle moving speed,

   wherein the electronic control unit (90) is configured to cause the own vehicle (100) to coast when a coasting permission condition becomes satisfied while powering the own vehicle (100) by the autonomous moving control even when the vehicle moving speed of the own vehicle (100) is lower than the predetermined upper limit vehicle moving speed, and
   wherein the coasting permission condition requires that a road located a predetermined distance ahead from the own vehicle (100) and on which the own vehicle (100) is expected to move, is a downhill road.

2. The vehicle driving assistance apparatus (10) according to claim 1,

   wherein the coasting permission condition also requires that the vehicle moving speed is lower than the predetermined upper limit vehicle moving speed and equal to or higher than a predetermined vehicle moving speed,
   wherein the predetermined vehicle moving speed is lower than the predetermined upper limit vehicle moving speed, and
   wherein the electronic control unit (90) is configured to set the predetermined vehicle moving speed to a lower vehicle moving speed as an amount of increase in the vehicle moving speed while the own vehicle (100) is moving on the downhill road, increases.

3. The vehicle driving assistance apparatus (10) according to claim 2,
   wherein the predetermined vehicle moving speed is equal to or higher than the predetermined lower limit vehicle moving speed.

4. The vehicle driving assistance apparatus (10) according to claim 1,

   wherein the coasting permission condition also requires that a distance between the own vehicle (100) and a start point of the downhill road is equal to or shorter than a predetermined distance, and
   wherein the electronic control unit (90) is configured to set the predetermined distance is set to a longer distance as an amount of increase in the vehicle moving speed while the own vehicle (100) is moving on the downhill road, increases.

5. The vehicle driving assistance apparatus (10) according to claim 1, wherein the coasting permission condition also requires that, if the own vehicle (100) starts coasting at the current time, the vehicle moving speed is predicted to reach the predetermined lower limit vehicle moving speed at a point of time when the own vehicle (100) reaches a start point of the downhill road.

6. The vehicle driving assistance apparatus (10) according to claim 1,

   wherein the coasting permission condition also requires that (i) there is no following vehicle (300) and (ii) an amount of increase in the vehicle moving speed while the own vehicle (100) is moving on the downhill road, is equal to or greater than a difference between the predetermined upper limit vehicle moving speed and the predetermined lower limit vehicle moving speed,
   wherein the electronic control unit (90) is configured to implement a coasting continuation notification to a user of the own vehicle (100) and to keep the own vehicle (100) coasting when the vehicle moving speed becomes lower than the predetermined lower limit vehicle moving speed after starting to cause the own vehicle (100) to coast in response to the coasting permission condition becoming satisfied, and
   wherein the coasting continuation notification is a notification to notify the user that the own vehicle (100) is kept coasting since the downhill road exists on the road on which the own vehicle (100) is expected to move.

FIG.1

DFth

LNown

200

100

DRth

300

FIG.2

LNown

100

FIG.3

EP 4 574 608 A1

START — S400

IS ECO-AUTONOMOUS MOVING CONTROL REQUESTED ? — S405
No →

Yes

Xcoast = 0 ? — S410
No →

Yes

Xpower = 1 ? — S415
No →

Yes

IS DOWNHILL ROAD CONDITION SATISFIED ? — S420
No →

Yes

IS FRONT-AND-REAR VEHICLE CONDITION SATISFIED ? — S425
No →

Yes

SUB-ROUTINE (FIG. 5) — S430

EXECUTE ECO-AUTONOMOUS MOVING CONTROL — S435

STOP ECO-AUTONOMOUS MOVING CONTROL — S440

STOP FORCED COASTING CONTROL — S445

Xcoast ← 0 — S450

RETURN — S495

FIG.4

S500
START

S505
ACQUIRE SPEED-DOWN AMOUNT AND SPEED-UP AMOUNT

S510
IS STRONG ECO-LEVEL CONDITION SATISFIED ? — No

Yes S515
IS HIGH SPEED-UP AMOUNT CONDITION SATISFIED ? — No

Yes S520
STOP ECO-AUTONOMOUS MOVING CONTROL

S525
START FORCED COASTING CONTROL

S530
$X_{power} \leftarrow 0$
$X_{coast} \leftarrow 1$

S535
IS APPROPRIATE SPEED-DOWN AMOUNT CONDITION SATISFIED ? — No

Yes S540
STOP ECO-AUTONOMOUS MOVING CONTROL

S545
START FORCED COASTING CONTROL

S550
$X_{power} \leftarrow 0$
$X_{coast} \leftarrow 1$

S595
RETURN

FIG.5

21

```
                                    ┌─S600
         ╭─────────────────────────────╮
         │           START             │
         ╰─────────────────────────────╯
                       │
                       │            ┌─S605
         ╱─────────────────────────────╲      No
         ╲         Xcoast = 1 ?         ╱──────────────────────┐
                       │                                       │
                     Yes              ┌─S610                   │
         ╱─────────────────────────────╲      No               │
         ╲   IS DOWNHILL ROAD END       ╱──────────┐           │
         ╱   CONDITION SATISFIED ?      ╲           │           │
                       │                            │           │
                     Yes              ┌─S615        │           │
         ┌─────────────────────────────┐           │  ┌─S630   │
         │ STOP FORCED COASTING CONTROL │    ╱──────────────────────╲   No
         └─────────────────────────────┘    ╲      V < Vlower ?      ╱───────►
                       │            ┌─S620            │                 │
         ┌─────────────────────────────┐            Yes    ┌─S635       │
         │       Xcoast ← 0            │    ┌──────────────────────────┐│
         └─────────────────────────────┘    │ IMPLEMENT COASTING       ││
                       │            ┌─S625    │ CONTINUATION NOTIFICATION││
         ┌─────────────────────────────┐    └──────────────────────────┘│
         │ RESUME ECO-AUTONOMOUS MOVING │                 │              │
         │           CONTROL            │                 │              │
         └─────────────────────────────┘                 │              │
                       │◄────────────────────────────────┘              │
                       │◄───────────────────────────────────────────────┘
                       │            ┌─S695
         ╭─────────────────────────────╮
         │           RETURN            │
         ╰─────────────────────────────╯
```

# FIG.6

FIG.7

FIG.8

EP 4 574 608 A1

```
                                    ┌─ S900
                            ╭──────────────────╮
                            │      START       │
                            ╰──────────────────╯
                                     │            ┌─ S905
                    ┌────────────────┴───────────────┐   No
                   ╱  IS ECO-AUTONOMOUS MOVING         ╲ ─────────────────────┐
                   ╲     CONTROL REQUESTED ?           ╱                       │
                    └────────────────┬───────────────┘                        │
                                     │ Yes    ┌─ S910                          │
                                     │                    ┌─ S940             │
                    ┌────────────────┴───────────────┐  No  ┌──────────────────────────────┐
                   ╱        Xcoast = 0 ?              ╲ ──┐  │  STOP ECO-AUTONOMOUS MOVING   │
                   ╲                                 ╱   │  │          CONTROL             │
                    └────────────────┬───────────────┘   │  └──────────────────────────────┘
                                     │ Yes    ┌─ S915     │         ┌─ S945
              No    ┌────────────────┴───────────────┐    │  ┌──────────────────────────────┐
         ┌─────────╱        Xpower = 1 ?             ╲    │  │  STOP FORCED COASTING CONTROL │
         │         ╲                                 ╱    │  └──────────────────────────────┘
         │   ┌─ S935 └────────────────┬───────────────┘    │         ┌─ S950
 ┌───────────────────────────┐        │ Yes    ┌─ S920     │  ┌──────────────────────────────┐
 │ EXECUTE ECO-AUTONOMOUS     │  ┌─────┴────────────┐  No   │  │        Xcoast ← 0            │
 │      MOVING CONTROL        │ ╱ IS CURVED ROAD     ╲ ──┐  │  └──────────────────────────────┘
 └───────────────────────────┘ ╲  CONDITION SATISFIED? ╱  │  │
         │                      └─────────┬────────────┘  │  │
         │                                │ Yes  ┌─ S925  │  │
         │                  ┌─────────────┴──────────┐ No │  │
         │                 ╱ IS FRONT-AND-REAR VEHICLE ╲──┤  │
         │                 ╲  CONDITION SATISFIED ?    ╱  │  │
         │                  └─────────────┬──────────┘   │  │
         │                                │ Yes  ┌─ S930 │  │
         │                  ┌─────────────┴──────────┐   │  │
         │                  │   SUB-ROUTING (FIG. 10) │   │  │
         │                  └─────────────┬──────────┘   │  │
         │                                │              │  │
         └────────────────────────────────┴──────────────┴──┘
                                     │   ┌─ S995
                            ╭──────────────────╮
                            │      RETURN       │
                            ╰──────────────────╯
```

# FIG.9

START ⟋S1000

ACQUIRE SPEED-DOWN AMOUNT ⟋S1005

⟋S1010
IS SPECIFIED SPEED-DOWN
AMOUNT CONDITION SATISFIED ?    No

Yes ⟋S1015
STOP ECO-AUTONOMOUS MOVING
CONTROL

START FORCED COASTING CONTROL ⟋S1020

⟋S1025
Xpower ← 0
Xcoast ← 1

RETURN ⟋S1095

# FIG.10

26

```
                                          ┌S1100
        ┌─────────────────────────────────────┐
        │              START                  │
        └─────────────────────────────────────┘
                          │               ┌S1105
                 ╱────────────────────────╲        No
                ╱       Xcoast = 1 ?        ╲───────────┐
                ╲                           ╱           │
                 ╲──────────┬──────────────╱            │
                         Yes │       ┌S1110             │
                 ╱────────────────────────╲        No   │
                ╱    IS CURVED ROAD START   ╲──────────┐│
                ╲    CONDITION SATISFIED ?   ╱          ││
                 ╲──────────┬──────────────╱           ││
                         Yes │       ┌S1115            ││
        ┌─────────────────────────────────────┐        ││
        │   STOP FORCED COASTING CONTROL      │        ││
        └─────────────────────────────────────┘        ││
                          │               ┌S1120        ││
        ┌─────────────────────────────────────┐        ││
        │           Xcoast ← 0                │        ││
        └─────────────────────────────────────┘        ││
                          │               ┌S1125        ││
        ┌─────────────────────────────────────┐        ││
        │   RESUME ECO-AUTONOMOUS MOVING      │        ││
        │            CONTROL                  │        ││
        └─────────────────────────────────────┘        ││
                          │←──────────────────────────┘│
                          │               ┌S1195 ←──────┘
        ┌─────────────────────────────────────┐
        │              RETURN                 │
        └─────────────────────────────────────┘
```

# FIG.11

Europäisches
Patentamt

European
Patent Office

Office européen
des brevets

# EUROPEAN SEARCH REPORT

**Application Number**

EP 24 22 0614

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2017/221233 A1 (WALDHORN JOSHUA [IL]) 28 December 2017 (2017-12-28) | 1,5 | INV. B60W30/14 B60W30/16 B60W30/18 B60W50/00 B60W50/14 |
| A | * paragraphs [0125], [0129], [0130]; figures 2a-2e * | 2-4,6 | |
| Y | EP 2 718 161 B1 (SCANIA CV AB [SE]) 6 April 2016 (2016-04-06) | 1,5 | |
| A | * paragraphs [0029], [0041], [0060], [0065], [0066]; claim 1; figures 3A-3B * | 2-4,6 | |
| A | US 2019/100208 A1 (PLIANOS ALEX [GB] ET AL) 4 April 2019 (2019-04-04) * paragraphs [0089], [0093], [0102] - [0104], [0108], [0157]; claim 1; figure 3 * | 1-6 | |

|  |  |
|---|---|
| | **TECHNICAL FIELDS SEARCHED (IPC)** |
| | B60W |

The present search report has been drawn up for all claims

| Place of search | Date of completion of the search | Examiner |
|---|---|---|
| Munich | 28 April 2025 | Rameau, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 0614

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2025

| Patent document cited in search report | Publication date | Patent family member(s) | Publication date |
|---|---|---|---|
| WO 2017221233 A1 | 28-12-2017 | IL 263832 A | 31-01-2019 |
| | | WO 2017221233 A1 | 28-12-2017 |
| EP 2718161 B1 | 06-04-2016 | BR 112013029641 A2 | 17-11-2020 |
| | | CN 103608231 A | 26-02-2014 |
| | | EP 2718161 A1 | 16-04-2014 |
| | | JP 5745691 B2 | 08-07-2015 |
| | | JP 2014516149 A | 07-07-2014 |
| | | KR 20140020356 A | 18-02-2014 |
| | | RU 2014100180 A | 20-07-2015 |
| | | SE 1150529 A1 | 11-12-2012 |
| | | US 2014088847 A1 | 27-03-2014 |
| | | WO 2012169962 A1 | 13-12-2012 |
| US 2019100208 A1 | 04-04-2019 | DE 102018215973 A1 | 05-12-2019 |
| | | GB 2567154 A | 10-04-2019 |
| | | US 2019100208 A1 | 04-04-2019 |

EPO FORM P0459

For more details about this annex : see Official Journal of the European Patent Office, No. 12/82

**REFERENCES CITED IN THE DESCRIPTION**

**Patent documents cited in the description**

- JP 2022095320 A